Europäisches Patentamt

European Patent Office

Office européen des brevets

(11) Veröffentlichungsnummer : **0 151 415**
**B1**

(12) # EUROPÄISCHE PATENTSCHRIFT

(45) Veröffentlichungstag der Patentschrift :
28.03.90

(51) Int. Cl.⁵ : **H 05 B   7/06, F 27 D  11/10**

(21) Anmeldenummer : 85100501.7

(22) Anmeldetag : 18.01.85

(54) Gleichstrom-Lichtbogenofen oder Gleichstrom-Lichtbogenpfanne.

(30) Priorität : 25.01.84 SE 8400367

(43) Veröffentlichungstag der Anmeldung :
14.08.85 Patentblatt 85/33

(45) Bekanntmachung des Hinweises auf die Patenterteilung : 28.03.90 Patentblatt 90/13

(84) Benannte Vertragsstaaten :
CH DE FR GB LI

(56) Entgegenhaltungen :
DE—C—  631 872
FR—A—  670 019
FR—A—  888 149
GB—A—  152 145

(73) Patentinhaber : ASEA AB
S-721 83 Västeras (SE)

(72) Erfinder : Rappinger, Bo
Sandgärdsgatan 66
S-723 36 Västeras (SE)
Erfinder : Stenkvist, Sven Einar, Dipl.-Ing.
Ormbergssvängen 10
S-724 62 Västeras (SE)

(74) Vertreter : Boecker, Joachim, Dr.-Ing.
Rathenauplatz 2-8
D-6000 Frankfurt a.M. 1 (DE)

EP 0 151 415 B1

Jouve, 18, rue St-Denis, 75001 Paris, France

## Beschreibung

Die vorliegende Erfindung betrifft einen Gleichstrom-Lichtbogenofen oder Gleichstrom-Lichtbogenpfanne gemäß dem Oberbegriff des Anspruches 1. Ein solcher Ofen beziehungsweise eine solche Pfanne ist bekannt aus der DE-A-3 413 745.

In der genannten Druckschrift wird ein Ofen beziehungsweise eine Pfanne beschrieben, bei dem/der der Ofen- oder Pfannenboden sowie die unteren Bereiche der Ofen- oder Pfannenwand aus elektrisch leitender Stampfmasse, zum Beispiel durch Einlagerung elektrisch leitender Teile in die Stampfmasse, oder aus einer Schicht aus abwechsend angeordneten elektrisch nicht leitenden Ziegeln und durch diese Schicht hindurchreichenden elektrisch leitenden Ziegeln besteht/bestehen. Auf diese Weise wird ein den Boden und die unteren Bereiche der Seitenwände umfassendes Bodenkontaktteil geschaffen.

Elektrisch leitende Ausfütterungen wurden bisher sehr dick bemessen, um die Wärmebelastung des Außenmantels klein zu halten. Stromleitendes Material ist nämlich gleichzeitig ein guter Wärmeleiter.

Der Erfindung liegt die Aufgabe zugrunde, einen Gleichstrom-Lichtbogenofen oder eine Gleichstrom-Lichtbogenpfanne der eingangs genannten Art zu entwickeln, welcher/welche in ihren Abmessungen reduziert werden kann, ohne seine/ihre elektrischen oder metallurgischen Eigenschaften zu verschlechtern.

Zur Lösung dieser Aufgabe wird ein Gleichstrom-Lichtbogenofen oder eine Gleichstrom-Lichtbogenpfanne gemäß dem Oberbegriff des Anspruches 1 vorgeschlagen, welcher/welche erfindungsgemäß die im kennzeichnenden Teil des Anspruches 1 genannten Merkmale hat.

Vorteilhafte Ausgestaltungen der Erfindung sind in den weiteren Ansprüchen genannt.

Bei einem Ofen/einer Pfanne nach der Erfindung ist es möglich, den Boden und die Wände dünner auszubilden als bei den bekannten Ofen/Pfannen, da die stromleitenden Teile nur an solchen Stellen des Ofens/ der Pfanne angeordnet sind, die am wenigsten von der Hitze beeinflußt werden. Dies ist entweder der periphere Bereich des Bodens oder, indirekt, der Wandbereich oberhalb des Badspiegels. Dieser Vorteil wird unabhängig davon erzielt, ob der untere Teil der Wand des Ofens oder der Pfanne ebenfalls einen Teil des Bodenkontaktes bildet oder nicht.

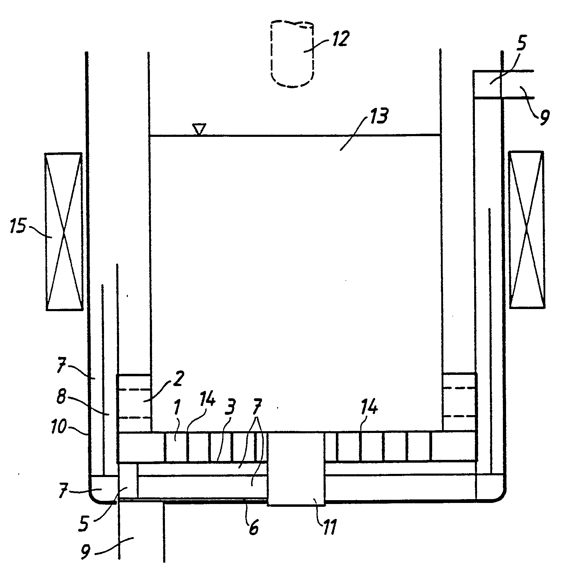

Anhand des in der Figur gezeigten Ausführungsbeispiels soll die Erfindung näher erläutert werden.

Das den Ofen beziehungsweise die Pfanne nach der Erfindung charakterisierende Prinzip besteht darin, daß der positive Pol (der Anschluß) 6-9 an dem am wenigsten von der Hitze beeinflußten Teil des Bodens oder der Wand oberhalb des Badspiegels angeordnet wird. Die Wahl der Stelle kann beispielsweise von dem am Boden zur Verfügung stehenden Platz oder mit Rücksicht auf die Anbringung von induktiven Rührern erfolgen.

Dadurch, daß die Stromleitung an verschiedenen Stellen im Ofen für Verschleißfutter bzw. Außenfutter geschieht, bringt es diese Labyrinthwirkung mit sich, daß der Wärmefluß durch die Stromleiter der Blechform (siehe unten) gekühlt werden kann, bevor der Fluß die Stromleiter des Außenfutters erreicht.

Der Ofen/die Pfanne ist in üblicher Weise mit mindestens einer Lichtbogenelektrode 12 versehen, die als Kathode an eine nicht dargestellte Gleichstromquelle angeschlossen ist. Der Ofen/ die Pfanne kann für alle Arten von Metallen oder Legierungen, einschließlich Stahl, verwendet werden.

Die Schicht 1, auf der unmittelbar die Schmelze 13 ruht, besteht aus elektrisch leitenden Ziegeln, beispielsweise Magnesit-Graphit-Ziegeln, die abwechselnd mit nichtleitenden Ziegeln angeordnet sind. Diese Schicht zeichnet sich durch gute elektrische Leitfähigkeit und gleichzeitig durch gute Wärmeisolation aus. Die Schicht 1 kann auch aus einer elektrisch nichtleitenden Stampfmasse bestehen, durch die Stifte oder Bleche 14 zur Leitung des elektrischen Stromes hindurchgehen. Diese Bleche 14 können auch aus losen Winkeln mit einer umgebenden feuerfesten Masse 1 und/oder einem Graphit enthaltenden Ausfütterungsmaterial bestehen, die/das als stromleitendes Verschleißfutter dient. Im unteren Bereich der Innenseiten des Ofens oder der Pfanne ist eine Schicht aus elektrisch leitenden, eventuell blechgefütterten Ziegeln 2 angeordnet. Diese Schicht kann auch die für die Schicht 1 genannte Zusammensetzung haben ; jedoch kann diese Schicht auch ganz fehlen. Eventuell können für die Schicht 2 Ziegel mit Stahlblechen verwendet werden. Diese Seitenschichten bilden in dem dargestellten Fall zusammen mit der Schicht 1 den Bodenkontakt.

Unter der Schicht 1 ist ein Stahlblech 3 mit daran festgeschweißten Stahlstiften, -stangen oder -blechen 14 der oben beschriebenen Art angeordnet, die durch die Schicht 1 hindurchgehen. Das ganze Bodenkontakt 3 kann als eine zylindrische Blechform vorgefertigt werden, die mit festgeschweißten Stiften, Stangen oder Blechen 14 versehen ist. Zwischen diesen Stiften, Stangen oder Blechen kann dann elektrisch nichtleitende Stampfmasse auf übliche Weise eingestampft werden. In diesem Fall gehören zu der zylindrischen Blechform die Seitenteile 2, welche den untersten Bereich der Innenseite der Pfanne/des Ofens bilden. Radial nach außen schließt sich an die Seitenteile 2 eine wärmeisolierende und elektrisch nichtleitende Schicht 8 aus trockengestampfter Magnesitmasse oder dergleichen an, und auf diese Schicht folgt eine wärmeisolierende und elektrisch nichtleitende Schicht 7 aus Schamotteziegeln oder dergleichen. Eine Schicht gleicher Art ist unter dem Bodenteil 1 bis 3 angebracht. Unter der letztgenannten Schicht ist eine weitere elektrisch isolierende Schicht 7 angeordnet, die zu dem Außenfutter gehört (7 + 8). An der Seite dieser isolierenden Schichten 7, in den peripheren Bereichen der Pfanne oder des Ofens, ist ein Schicht 5 aus elektrisch leitendem Material angeordnet, die die isolierenden Schichten überbrückt und eine elektrische Verbindung zwischen dem Bodenteil 3-1 und einem äußeren Stromleiter 9 herstellt. Diese Schicht 5 kann aus Graphitziegeln, Magnesit-Graphit-Ziegeln, Graphit enthaltenden Ziegeln oder blechgefütterten Ziegeln bestehen. Die Schicht 5 kann so aufgebaut sein, daß sie einen Ring bildet oder eine Anzahl voneinander getrennter Ringsegmente. Der Stromleiter 9 kann auch oberhalb des Badspiegels angeordnet sein und elektrisch mit dem Stromleiter der Blechform 3 verbunden sein.

Im linken Teil der Figur ist eine Anordnung mit Bodenanschluß dargestellt. Der aus einer Kupferschiene bestehende Stromleiter 9 ist an eine Kupferplatte 6 angeschlossen. Zentral im Boden des Ofens/der Pfanne ist ein Abflußloch vorhanden, das mit einer Ventil- oder Stopfenvorrichtung 11 zur Entleerung des Ofens/der Pfanne versehen ist.

Die Blechform 3, die parallel zu der Begrenzungsfläche zwischen Futter und Bad angeordnet ist, leitet den Strom zu den Teilen der peripheren Schicht 5 des Bodens. Blechverkleidete Ziegel oder lose Blechwinkel zwischen den Ziegeln 2 und/oder geschweißte Bleche oder lose Winkel 14 mit umgebender feuerfester Masse 1 oder nichtleitende Ziegel 1 und/oder Graphit enthaltendes Ausfütterungsmaterial bilden, wie gesagt, das stromleitende Verschleißfutter.

Im rechten Teil der Figur erfolgt der Stromanschluß in der Wand über dem stromleitenden Teil des Verschleißfutters, vorzugsweise oberhalb des Badspiegels. Die Wahl dieser Anschlußform kann darauf beruhen, daß im Bodenbereich infolge des Abflußloches, Spülsteine oder anderer Injektionsausrüstungen bereits viel Raum in Anspruch genommen wird. Der Stromanschluß rechts oben in der Figur ersetzt also die Stromschiene 9 links unten in der Figur und er muß mit den stromleitenden Teilen 5 in Kontakt stehen.

In beiden Fällen kann natürlich auch nur die Wand oder nur der Boden mit einem leitendem Verschleißfutter versehen sein.

Der Ofen kann zerlegbar ausgeführt werden, so daß der Boden mit Verlängerungen der Stromleiter 14 oder zwecks eines Austausches derselben komplettiert werden kann.

Mit 15 ist ein mehrphasiger elektromagnetischer Umrührer bezeichnet.

Die Erfindung kann im Rahmen des offenbarten allgemeinen Erfindungsgedanken in vielfacher Weise variiert werden.

## Patentansprüche

1. Gleichstrom-Lichtbogenofen oder Gleichstrom-Lichtbogenpfanne zum Erwärmen von Schmelze mit mindestens einer Lichtbogenelektrode und mindestens einem Bodenkontakt oder mindestens einem Bodenfutter, wobei der Ofen- oder Pfannenboden (1) und eventuell auch die unteren Bereiche (2) der Ofen- oder Pfannenseitenwand aus einer elektrisch leitenden Schicht (1, 14) besteht, die aufgebaut ist aus einer elektrisch leitender Stampfmasse und/oder einer elektrisch nicht leitenden Stampfmasse mit hindurchtretenden elektrisch leitenden Stiften, Blechen oder Winkeln (14) und/oder aus abwechselnd angeordneten nicht leitenden und durch diese Schicht hindurchreichenden elektrisch leitenden Ziegeln, und wobei unter der genannten elektrisch leitenden Schicht (1, 14) eine metallische mit der genannten Schicht (1, 14) elektrisch in Verbindung stehende Platte (3) angeordnet ist, dadurch gekennzeichnet, daß unter der Platte (3) sich an diese Platte von innen nach außen mindestens eine elektrisch nichtleitende Schicht (7), auf der die Platte (3) liegt, anschließt und daß an den im peripheren Bereich des Ofens- oder Pfannenbodens oder an den oberhalb des Schmelzenspiegels liegenden Stirnseiten der letztgenannten Schicht/Schichten (7) eine elektrisch leitende Schicht (5) angeordnet ist, die eine elektrische Verbindung zwischen der erstgenannten Schicht (1, 14, 3) und den äußeren Stromleitern (9) für den Bodenkontakt herstellt.

2. Gleichstrom-Lichtbogenofen oder Gleichstrom-Lichtbogenpfanne nach Anspruch 1, dadurch gekennzeichnet, daß mindestens zwei elektrisch nichtleitende Schichten (7) vorhanden sind und daß an der Seite dieser Schichten (7) eine gemeinsame, elektrisch leitende Schicht (5) angeordnet ist.

3. Gleichstrom-Lichtbogenofen oder Gleichstrom-Lichtbogenpfanne nach Anspruch 1 oder 2, dadurch gekennzeichnet, daß die elektrisch leitende Schicht aus Graphitziegeln, Magnesit-Graphit-Ziegeln, Graphit enthaltenden Ziegeln oder blechgefütterten Ziegeln besteht.

4. Gleichstrom-Lichtbogenofen oder Gleichstrom-Lichtbogenpfanne nach einem der vorhergehenden Ansprüche, dadurch gekennzeichnet, daß die elektrisch leitende Schicht (5) als ein Ring oder eine Anzahl voneinander getrennter Ringsegmente aufgebaut ist, die längs der peripheren Teile des Bodens des Ofens/der Pfanne verlaufen.

5. Gleichstrom-Lichtbogenofen oder Gleichstrom-Lichtbogenpfanne nach einem der vorhergehenden Ansprüche, dadurch gekennzeichnet, daß der Ofen/die Pfanne derart zerlegbar ausgebildet ist, daß beispielsweise die Stromleiter in den verschiedenen Schichten verlängert oder komplettiert werden können.

## Claims

1. Direct current arc furnace or direct current arc ladle for heating of melt with at least one arc electrode and with at least one hearth connection or at least one bottom lining, with the bottom (1)

3

of the furnace/ladle and possibly also the lowermost wall portions (2) of the furnace/ladle consisting of an electrically conducting layer (1, 14), which is built up of an electrically conducting rammed compound and/or an electrically non-conducting rammed compound with electrically conducting pins, sheet metal pieces or angular pieces (14) extending through said compound and/or consisting of alternately arranged non-conducting and electrically conducting bricks extending through said layer, and with a metallic plate (3) arranged below said electrically conducting layer (1, 14) and being electrically connected to said layer (1, 14), characterized in that below the plate (3) this plate is followed, in the direction from the inside towards the outside, by at least one electrically non-conducting layer (7) on which the plate (3) rests, and that at the peripheral area of the wall of the furnace/ladle or at the front side of the last mentioned layer/layers (7) above the melt level there is arranged an electrically conducting layer (5), which brings about an electrical connection between the first-mentioned layer (1, 14, 3) and the outer current conductors (9) of the hearth connection.

2. Direct current arc furnace or direct current arc ladle according to claim 1, characterized in that there are at least two electrically non-conducting layers (7) and that a common, electrically conducting layer (5) is arranged adjacent to said layers (7).

3. Direct current arc furnace or direct current arc ladle according to claim 1 or 2, characterized in that the electrically conducting layer consists of graphite bricks, magnesite/graphite bricks, graphite-containing bricks or metal-lined bricks.

4. Direct current arc furnace or direct current arc ladle according to any of the preceding claims, characterized in that the electrically conducting layer (5) is built up as a ring or of a number of mutually spaced-apart ring segments, which extend along the peripheral parts of the bottom of the furnace/ladle.

5. Direct current arc furnace or direct current arc ladle according to any of the preceding claims, characterized in that the furnace/ladle is separable in such a way that, for example, the current conductors in the different layers can be extended or completed.

**Revendications**

1. Four à arc à courant continu, ou poche à arc courant continu, destiné à chauffer un bain et comprenant au moins une électrode d'arc et au moins un contact de fond ou au moins un garnissage de fond, le fond du four, ou le fond de la poche, (1) et éventuellement aussi les parties inférieures (2) de la paroi latérale du four, ou de la poche, est constitué d'une couche (1, 14) conductrice de l'électricité, formée d'une masse damée conductrice de l'électricité et/ou d'une masse damée non conductrice de l'électricité à travers laquelle passent des broches, des tôles ou des cornières (14) conductrices de l'électricité, et de briques conductrices de l'électricité et traversant cette couche, une plaque métallique (3) en liaison électrique avec ladite couche (1, 14) étant disposée en-dessous de ladite couche (1, 14) conductrice de l'électricité, caractérisé en ce que sous la plaque (3) se raccorde à cette plaque, de l'intérieur vers l'extérieur, au moins une couche (7) non conductrice de l'électricité sur laquelle repose la plaque (3) et en ce que dans la partie périphérique du fond du four, ou du fond de la poche, ou sur les côtés frontaux de la couche ou des couches (7) mentionnées en dernier, se trouvant au-dessus du niveau du bain, est disposée une couche (5) qui est conductrice de l'électricité et qui ménage pour le contact de fond une liaison électrique entre la couche (1, 14, 3) mentionnée en premier et les conducteurs extérieurs du courant (9).

2. Four à arc à courant continu, ou poche à arc à courant continu, suivant la revendication 1, caractérisé en ce qu'il est prévu au moins deux couches (7) non conductrices de l'électricité, et en ce que, sur le côté de ces couches (7), est prévue une couche (5) commune, conductrice de l'électricité.

3. Four à arc à courant continu, ou poche à arc à courant continu, suivant la revendication 1 ou 2, caractérisé en ce que la couche conductrice de l'électricité est en briques de graphite, en briques de magnésite et de graphite, en briques contenant du graphite ou en briques garnies de tôles.

4. Four à arc à courant continu, ou poche à arc courant continu, suivant l'une des revendications précédentes, caractérisé en ce que la couche (5) conductrice de l'électricité affecte la forme d'un anneau ou d'un grand nombre de segments annulaires, séparés les uns des autres, et s'étendant le long des parties périphériques du fond du four ou de la cuve.

5. Four à arc à courant continu, ou poche à arc à courant continu, suivant l'une des revendications précédentes, caractérisé en ce que le four/la poche est constitué(e) de manière démontable, de façon que par exemple les conducteurs du courant puissent être prolongés ou complétés dans les diverses couches.